# EUROPÄISCHE PATENTSCHRIFT

(11) **EP 0 540 536 B1**
(45) Veröffentlichungstag und Bekanntmachung des Hinweises auf die Patenterteilung: **29.03.1995**
(21) Anmeldenummer: 91912135.0
(22) Anmeldetag: 03.07.1991
(51) Int. Cl.: H04L 9/00

(54) **SCHLÜSSELGERÄT MIT EINER ANZEIGEEINRICHTUNG ZUR IDENTIFIZIERUNG EINER FEHLERHAFTEN FUNKTION IM SCHLÜSSELGERÄT**
CRYPTOGRAPHIC DEVICE WITH A DISPLAY FOR INDENTIFICATION OF A DEFECTIVE FUNCTION IN THE DEVICE
APPAREIL CRYPTOGRAPHIQUE AVEC UNITE D'AFFICHAGE POUR L'IDENTIFICATION D'UNE FONCTION DEFECTUEUSE DANS L'APPAREIL CRYPTOGRAPHIQUE

(30) Priorität: 20.07.1990 DE 4023131
(43) Veröffentlichungstag der Anmeldung: 12.05.1993
(73) Patentinhaber: SIEMENS AKTIENGESELLSCHAFT, 80333 München (DE)
(72) Erfinder: BETTENHAUSEN, Helmut, D-6441 Cornberg Rockensuess (DE)
(86) Internationale Anmeldenummer: DE9100550
(87) Internationale Veröffentlichungsnummer: WO9202086

(56) Entgegenhaltungen:
- DE-A- 3 325 349
- PATENT ABSTRACTS OF JAPAN vol. 11, no. 329 (E-552)(2776) 27. Oktober 1987 & JP-A-62 115 941 (HITACHI LTD.) 27. Mai 1987
- RUNDFUNKTECHNISCHE MITTEILUNGEN Bd. 26, Nr. 3, Mai 1982, Norderstedt DE Seiten 121-132; TRISSL: 'Die praktische Fehlersuche an Geräten mit Mikrocomputern'

## Beschreibung

Die Erfindung betrifft ein Schlüsselgerät gemäß den Merkmalen des Patentanspruches 1.

Schlüsselgeräte zum Betrieb mit einer Datenendeinrichtung in einem Datennetz sind hinsichtlich der Betriebssicherheit besonders empfindliche Geräte. Funktionsfehler, die im Schlüsselgerät auftreten, wirken sich unmittelbar auf Datenübertragung im Netz aus. Dies kann zu einer Übertragung von Daten mit verfälschter Information führen, was von den Teilnehmern des Netzes unter Umständen nicht unmittelbar sofort erkannt werden kann. Es ist deshalb notwendig eine Störung der Funktion des Schlüsselgerätes sofort anzuzeigen.

Aus der DE-Al 33 25 349 ist ein Verfahren zur Überwachung und Wiederherstellung des Synchronlaufes von Datenverschlüsselgeräten bekannt. Hierbei wird der ausgesandte oder der empfangene Datenstrom nach einer vorgegebenen Fehlerstruktur untersucht. Überwachungsschaltungen werden sende- und empfangsseitig für die übertragenen Kryptodaten eingesetzt.

Schlüsselgeräte sind funktionsbedingt kompliziert aufgebaute Geräte und aus Sicherheits- und Kostengründen nicht beliebig austauschbar. Es ist deshalb notwendig, auftretende Funktionsfehler sofort zu erkennen und zu identifizieren und diese Fehler zu beheben.

Es ist deshalb Aufgabe der Erfindung, ein Schlüsselgerät der eingangs genannten Art so auszugestalten, daß auftretende Funktionsfehler im Schlüsselgerät sicher erkannt und identifiziert werden können.

Diese Aufgabe wird bei einem Schlüsselgerät der eingangs genannten Art gemäß dem kennzeichnenden Teil des ersten Patentanspruches gelöst.
Vorteilhafte Ausführungsformen der Erfindung sind in den Unteransprüchen gekennzeichnet.

Dadurch, daß der Steuerungsanordnung für das Schlüsselgerät eine interne Überwachungsanordnung zur selbständigen Funktionsüberwachung des Schlüsselgerätes zugeordnet wird, mit der eine Anzeigeeinrichtung zur Identifizierung einer fehlerhaften Funktion im Schlüsselgerät durch alphanumerische Darstellung gekoppelt ist, lassen sich auftretende Funktionsfehler sicher erkennen und identifizieren.

Die Funktionsüberprüfung des Schlüsselgerätes erfolgt kontinuierlich während des Betriebs über der Überwachungsanordnung zugeordnete Überwachungsfunktionen, wobei in vorteilhafter Weise die Überwachungsfunktionen untereinander hierarchisch strukturiert sind. Die Struktur hängt ab von der Bedeutung und der Wirkung der möglichen auftretenden Funktionsfehler. Im allgemeinen wird bei einem auftretenden Fehler die Steuerungsanordnung des Schlüsselgerätes und damit das Schlüsselgerät selbst in einen Fehlerzustand versetzt und damit die Datenübertragung erkennbar sofort unterbrochen. Die auftretende Fehlfunktion wird alphanumerisch in einer optischen Anzeigeeinrichtung angezeigt, so daß sie anhand dieser Anzeige sofort identifiziert werden kann. Die Anzeige enthält dabei Informationen über die Art der Störung und den Ort ihres Auftretens innerhalb der Steuerungsanordnung bzw. innerhalb eines in der Steuerungsanordnung ablaufenden Steuerprogrammes.

Durch eine Selbsttestroutine, die z.B. durch Eingabe von "Reset" ausgelöst werden kann, kann vor der Aufnahme des Datenbetriebs die Funktion des Schlüsselgerätes überprüft werden. Damit ergibt sich ein Höchstmaß an Sicherheit für den Betrieb eines derartigen Schlüsselgerätes.

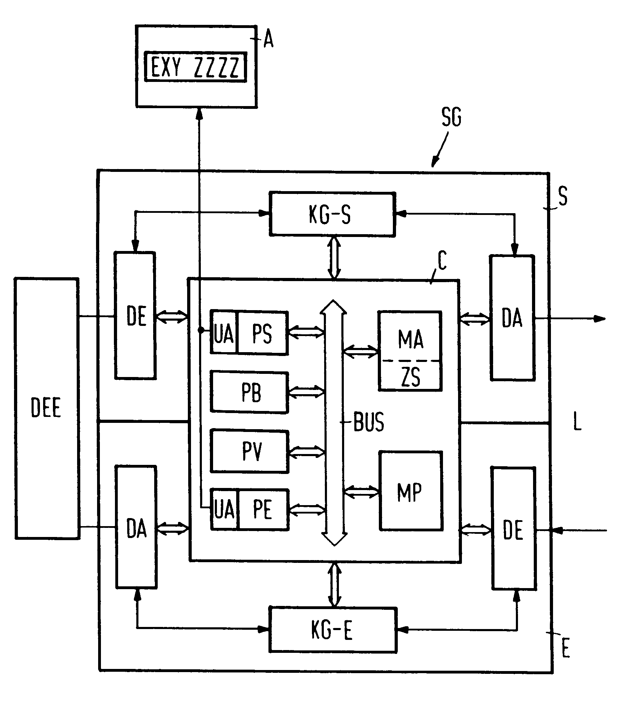

Eine Ausführungsform der Erfindung ist in der Zeichnung dargestellt und wird im folgenden beispielsweise näher beschrieben. Dabei zeigt die Figur ein schematisches Blockschaltbild eines Schlüsselgerätes mit integrierter Überwachungsanordnung und einer optischen Anzeigeeinrichtung.

Ein in der Figur dargestelltes gesichertes Fernschreibnetz enthält eine Vielzahl von Datenendeinrichtungen DEE in Form von Fernschreibgeräten oder Personalcomputern, wobei in der Zeichnung der Einfachheit halber nur eine Datenendeinrichtung DEE dargestellt ist. Jeder Datenendeinrichtung DEE ist ein Schlüsselgerät SG zugeordnet, mit einem Sende-Kryptogenerator KG-S in einem Sendekanal S und einem Empfangs-Kryptogenerator KG-E in einem Empfangskanal E. Die Schlüsselgeräte SG der verschiedenen Datenendeinrichtungen sind untereinander identisch aufgebaut. Das Fernschreibnetz wird in dem dargestellten Fall in der Verkehrsart "Halbduplex" betrieben, d.h. zwischen den Datenendeinrichtungen befindet sich eine Übertragungsstrecke in Form einer einzigen Leitung L oder bei Funkbetrieb einem einzigen Übertragungskanal. Übertragen werden über die Leitungen in üblicher Weise Fernschreibzeichen in fünfer oder achter Code mit einem vorausgehenden Startschritt und einem nachfolgenden Stopschritt mit fünf bzw. acht Informationsbits. Das dargestellte Schlüsselgerät ist jedoch auch für einen Betrieb in anderen Datennetzen geeignet.

Sowohl dem Sende-Kryptogenerator KG-S als auch dem Empfangs-Kryptogenerator KG-E sind eingangs- und ausgangsseitig Dateneingangs- und Datenausgangsschaltungen DE, DA zugeordnet, die handelsübliche Empfangs- und Sendebausteine z.B. UART (universal asynchronous receiver transmitter) mit zugehörigen (hier nicht dargestellten) Schieberegistern aufweisen. Die Schieberegister dienen als Zwischenspeicher um die von den UART gelieferten Informationsbits (5 oder 8) der Fernschreibzeichen zwischenzuspeichern und sie den Kryptogeneratoren zum Verschlüsseln bzw. Entschlüsseln zuzuführen. In der Datenausgangsschaltung DA werden die verschlüsselten bzw. entschlüsselten Informationsbits zwischengespeichert und zur Übernahme durch die Datenendeinrichtung bzw. zur Übertragung über die Leitung L bereitgestellt. Gesteuert wird der Datenfluß im Schlüsselgerät sowohl im Sende- als auch im Empfangskanal über eine Steuerungsanordnung C die mikroprozessorgesteuert ist. Sie enthält vier Prozessoren PS, PB, PV und PE die über ein Bussystem BUS mit einem Arbeitsspeichersystem MA und einem Programmspeichersystem MP in Verbindung stehen. Der Prozessor PS ist dabei dem Sendekanal, der Prozessor PE dem Empfangskanal, der Prozessor PB Bedienfeldfunktionen und der Prozessor PV der Abwicklung der Schlüsselverwaltung zugeordnet. Mit der Steuerungsanordnung C und insbesondere den darin enthaltenen Prozessoren PS und PE gekoppelt ist eine Anzeigeeinrichtung A in Form eines LCD-Displays zur alphanumerischen Darstellung von Informationen über festgestellte fehlerhafte Funktionen des Schlüsselgerätes.

Zur Feststellung evtl. auftretender Fehlfunktionen im Schlüsselgerät enthält die Steuerungsanordnung C eine Überwachungsanordnung UA, die als programmgesteuerte Rechneranordnung ausgebildet ist. Die Rechenarbeit für die Überwachungsanordnung UA wird dabei über die Prozessoren PS und PE der Empfangs- und Sendekanäle abgewickelt. Das Rechnerprogramm für die Überwachungsanordnung ist in einem der Programmspeicher MP gespeichert. Als Arbeitsspeicher dienen Teile des Speichers MA. Die Steuerungsanordnung kann jedoch auch durch Elemente anderer Mikroprozessoren gebildet werden oder es kann ein gesonderter Mikroprozessor für die Steuerungsanordnung selbst vorgesehen sein. Die Steuerungsanordnung UA überwacht die Funktion des Schlüsselgerätes im Betrieb und vor Aufnahme des Betriebes selbständig und bringt alle fehlerhaften Funktionen im Schlüsselgerät zur Anzeige über das Display A. Bei einer fehlerhaften Funktion wird gleichzeitig sichergestellt, daß die Steuerungsanordnung C und damit das Schlüsselgerät selbst in einen Fehlerzustand versetzt wird. Damit wird die Datenübertragung im Datennetz unterbrochen und zwar solange, bis der Fehler behoben ist.

Wie bereits beschrieben, ist die Überwachungsanordnung UA als programmgesteuerte Rechneranordnung ausgebildet, über die zur Funktionsüberwachung des Schlüsselgerätes eine Mehrzahl von untereinander hierarchisch strukturierten Überwachungsfunktionen aufrufbar ist. Die hierarchische Struktur der Überwachungsfunktion hängt dabei ab von der Bedeutung und der Wirkungen der über diese Überwachungsfunktionen identifizierbaren Funktionsfehler des Schlüsselgerätes. Die Hierarchie dieser Überwachungsfunktion kann deshalb gegebenenfalls unterschiedlichen Einsatzbereichen des Schlüsselgerätes angepaßt werden. Dies kann durch einfache Änderung im Programm geschehen.

Stellt die Überwachungsanordnung eine Fehlfunktion fest, was den sogenannten "Exception"-Fall definiert, so wird die Fehlfunktion als "Exception" alphanumerisch in der Anzeigeeinrichtung dargestellt. Als "Exceptions", d.h. Fehlfunktionen definierter Art können dabei auftreten:
- Exception, die aus unerwarteten Meldungen entstehen
- Exception, die aus der Taskverfolgung entstehen
- Exception, die aus fehlerhaften Unterprogrammansprüngen entstehen
- Exception, die aus fehlerhaften Speichern entstehen und
- Exception, die sich aus einem Selbsttest ergeben.

Die dargestellten Exceptiontypen sind die grundsätzlich notwendigen Exceptiontypen, es ist jedoch ohne weiteres möglich, mit der Überwachungsanordnung noch andere Arten von Exception zu erkennen und anzuzeigen.

Mit Hilfe des in dem Programmspeicher MP gespeicherten Programms der Überwachungsanordnung werden die beschriebenen Exceptiontypen erkannt, identifiziert und über die alphanumerische Anzeigevorrichtung A dargestellt. Diese Anzeigeeinrichtung A kann auch Bestandteil der Bedieneinrichtung an der Datenendeinrichtung DEE sein.

Die Darstellung des Exceptionfalles erfolgt über ein Datenwort, das symbolisch im Bereich der Anzeigeeinrichtung A dargestellt ist. Dabei symbolisiert der Buchstabe E die Kennzeichnung des Datenwortes als Exception, der Buchstabe X den Exceptiontyp, der Buchstabe Y den Ort des Exception, d.h. die Adresse im Programm oder den Zustand oder den Event und der Buchstabe Z die Nummer des Event (Ereignisses). Anhand der dargestellten alphanumerischen Zeichen ist dann der Bediener des Schlüsselgerätes in der Lage, z.B. mit Hilfe einer Identifizierungsliste die fehlerhafte Funktion (Exception) sofort zu identifizieren.

Die zur Exception führenden Funktionsstörungen werden über die im folgenden beschriebenen Überwachungsfunktionen erfaßt. Jede Überwachungsfunktion repräsentiert dabei einen Programmteil der gesamten Überwachungsanordnung.

Die Überwachungsfunktionen im einzelnen:

Eine erste Überwachungsfunktion dient der Taskverfolgung. Damit wird geprüft, ob die Routine, die aufgrund eines Ereignisses angesprungen wird, einer dem eingestellten Zustand des Schlüsselgerätes zugeordneten Routine entspricht. Zu diesem Zwecke enthält die Überwachungsanordnung einen Zustandsspeicher ZS, der im dargestellten Fall aus einem Speicherbereich des Arbeitsspeichers MA besteht. In ihm wird der momentane Betriebszustand des Schlüsselgerätes, z.B. in Form eines ein- oder mehrstelligen Datenwortes abgespeichert. Diese Zustände können z.B. sein der "Grundzustand" des Schlüsselgerätes der "klar" Zustand oder die "Schlüssellage".

Innerhalb der Steuerungsanordnung treten nun eine Routine auslösende Meldungen oder Ereignisse auf, z.B. aufgrund von Anforderungen von Daten, aufgrund eines "Interrupt" oder hervorgerufen durch einen Tastendruck im Bedienfeld. Innerhalb der Steuerungsanordnung bzw. in ihrem Programm kann ein definierter Vorrat an Meldungen oder Ereignissen auftreten. Jeder Meldung ist ein definierter Zustand des Gerätes zugeordnet bzw. setzt diesen definierten Zustand voraus. Diese Zustandszuordnung kann z.B. durch entsprechende Codierung erreicht werden oder durch Zuordnung in einem Speicher.

Die der Taskverfolgung dienende Überwachungsfunktion vergleicht den für die Meldung vorausgesetzten Betriebszustand mit dem tatsächlichen momentanen Betriebszustand des Schlüsselgerätes. Dabei entnimmt sie den der Meldung vorausgesetzten Betriebszustand aus der Meldung und den tatsächlichen momentanen Betriebszustand des Schlüsselgerätes aus dem Zustandsspeicher ZS durch Abruf des gespeicherten Datenwortes.

Bei festgestellten, unterschiedlichen Zuständen versetzt die Überwachungsfunktion und damit die Überwachungsanordnung das Schlüsselgerät in einen Fehlerzustand und zeigt den Fehler über die Anzeigeeinrichtung A an.

Eine der Taskverfolgungsroutine nachgeordnete weitere Überwachungsfunktion dient zur Feststellung sogenannter unerwarteter Meldungen. Sie ist ähnlich strukturiert wie die Tastverfolgungsroutine, wobei die Überwachungsfunktion ein "Exception" auslöst, wenn Meldungen, die in einem Zustand vorgesehen sind, angereizt werden. Derartige unerwartete Meldungen können z.B. durch Fehlfunktion des Bedienfeldes der Datenendeinrichtung DEE ausgelöste bzw. angereizte Meldungen sein. Die Zuordnung zwischen Meldung und Zustand kann z.B. in dem Zustandsspeicher ZS in Form einer Tabelle abgelegt sein. Tritt dann eine Meldung auf, die für diesen betreffenden Zustand nicht zugelassen ist, so wird dies durch Vergleich der Meldung mit der Zuordnungstabelle im Zustandsspeicher über die Überwachungsroutine für fehlerhafte Meldungen festgestellt.

Auch im Fall von fehlerhaften Meldungen wird das Schlüsselgerät in den Fehlerzustand versetzt.

Eine weitere Überwachungsfunktion dient zur Ermittelung von fehlerhaft angesprungenen Unterprogrammen beim Ablauf des die Steuerungsanordnung steuernden Rechnerprogrammes. Dabei ist grundsätzlich jedem Unterprogramm des Gesamtprogrammes eine Kennummer zugeordnet. Bei Aufruf des Unterprogrammes mit Hilfe eines Aufrufkennzeichens wird die dem Unterprogramm zugeordnete Kennummer mit übergeben. Im Unterprogramm wird nun das Aufrufkennzeichen mit der dem Unterprogramm zugeordneten Kennnummer verglichen und bei Unterschieden der Kennzeichnung die Steuerungsanordnung in einen Fehlerzustand versetzt. Dieser Fehler wird dann in der Anzeigeeinrichtung A angezeigt. Durch diese Überwachungsfunktion für Unterprogramme kann z.B. ein fehlerhaftes Abspeichern aufgrund einer fehlerhaften Adresse festgestellt werden.

Wie bereits beschrieben, sind die Überwachungsfunktionen hierarchisch strukturiert und zwar in Abhängigkeit von der Bedeutung und Wirkung der auftretenden Fehler. So wird zunächst eine Taskverfolgungsroutine aufgerufen und dann die anderen Überwachungsroutinen. Der Grund ist darin zu sehen, daß z.B. bei "Interupt" in Unterprogramme gesprungen wird und erst dann eine Prüfung der Information erfolgt. Wenn also bereits das Sprungziel falsch ist, braucht die Information selbst nicht mehr geprüft werden.

Eine weitere Überwachungsroutine (Überwachungsfunktion) dient der Funktionsüberprüfung der Speicher innerhalb der Steuerungsanordnung C. Der Aufruf dieser Überwachungsroutine erfolgt über die Eingabe "Reset" durch die Datenendeinrichtung DEE. Nach Aufruf von "Reset" läuft automatisch ein Funktionstest für die Speicher MA und MP (Arbeitsspeicher und Programmspeicher) ab.

Der Programmspeicher wird dabei getestet durch Polynombildung von Prüfsummen und Vergleich der gebildeten Prüfsummen mit bereits abgelegten Prüfsummen. Ein Funktionstest des Arbeitsspeichers erfolgt dadurch, daß in den Arbeitsspeicher, der als RAM-Speicher ausgebildet sein kann, bestimmte Prüfbits eingelesen und wieder zurückgelesen werden. Auch hier wird eine Fehlfunktion in der Anzeigeeinrichtung A dargestellt und das Schlüsselgerät gegebenenfalls in den Fehlerzustand versetzt.

Bei dem dargestellten Ausführungsbeispiel der Steuerungsanordnung C arbeitet der Sendeprozessor PS als Master, der die anderen Prozessoren über den Datenbus steuert. Tritt also eine Funktionsstörung auf, die ein "Exception" auslöst, so gibt der Sendeprozessor PS eine entsprechende Meldung an den Empfangsprozessor PE. Der Empfangsprozessor bestätigt den Empfang und der Sendeprozessor PS unterbricht daraufhin die Verbindung über die Leitung L. Die Unterbrechung auslösende Fehlfunktion wird auf der Anzeigeeinrichtung A dargestellt.

## Patentansprüche

1. Schlüsselgerät zum Betrieb mit einer Datenendeinrichtung (DEE) in einem Datennetz mit
- einem Sendekanal (S) mit zugehörigem Sendekryptogenerator (KG-S) und entsprechenden Dateneingangs- und -ausgangsanordnungen (DE, DA),
- einem Empfangskanal (E) mit zugehörigem Empfangskryptogenerator (KG-E) und entsprechenden Dateneingangs- und -ausgangsanordnungen (DE, DA),
- einer Steuerungsanordnung (C) zur Steuerung des Empfangs- und Sendekanals (S, E),
- einer der Steuerungsanordnung (C) zugeordneten, internen Überwachungsanordnung (UA) zur selbständigen Funktionsüberwachung des Schlüsselgerätes und
- einer mit der Überwachungsanordnung (UA) gekoppelte Anzeigeeinrichtung (A) zur Identifizierung einer fehlerhaften Funktion im Schlüsselgerät durch alphanumerische Darstellung von Informationen über die fehlerhafte Funktion.

2. Schlüsselgerät nach Anspruch 1, **dadurch gekennzeichnet,** daß die Überwachungsanordnung (UA) als programmgesteuerte Rechneranordnung ausgebildet ist, über die zur Funktionsüberwachung des Schlüsselgerätes eine Mehrzahl von untereinander hierarchisch strukturierten Überwachungsfunktionen aufrufbar ist.

3. Schlüsselgerät nach Anspruch 2, **dadurch gekennzeichnet,** daß der Überwachungsanordnung (UA) ein Zustandsspeicher (ZS) zum Abspeichern des momentanen Betriebszustandes des Schlüsselgerätes zugeordnet ist und daß eine Überwachungsfunktion vorgesehen ist, die Meldungen in der Steueranordnung (C) erfaßt, wobei jede Meldung einen entsprechenden definierten Betriebszustand voraussetzt und jede Meldung eine Routine einer Steueranordnung auslösen kann, und die den für die Meldung vorausgesetzten Betriebszustand mit dem tatsächlichen momentanen Betriebszustand des Schlüsselgerätes vergleicht und bei unterschiedlichen Zuständen das Schlüsselgerät in einen Fehlerzustand versetzt und den Fehler über die Anzeigeeinrichtung (A) anzeigt.

4. Schlüsselgerät nach Anspruch 3, **dadurch gekennzeichnet,** daß der Meldung ein Datenwort zugeordnet wird, das den zur Meldung vorausgesetzten Betriebszustand des Schlüsselgerätes repräsentiert und daß in dem Zustandsspeicher (ZS) ein weiteres Datenwort gespeichert ist, das den tatsächlichen momentanen Betriebszustand des Schlüsselgerätes repräsentiert und daß die Überwachungsanordnung (UA) in einer insbesondere zur Taskverfolgung dienenden Überwachungsfunktion diese Datenwörter vergleicht.

5. Schlüsselgerät nach Anspruch 4, **dadurch gekennzeichnet,** daß eine der Funktionsprüfung der der Steuerungsanordnung (C) zugeordneten Speichern (MA, ZS, MP) dienende Überwachungsfunktion vorgesehen ist, die nach Aufruf einer "Reset" Routine die Speicher (MA, ZS, MP) durch Auslesen und Wiedereingabe von Prüfdatenwörtern prüft.

6. Schlüsselgerät nach Anspruch 2, **dadurch gekennzeichnet,** daß eine die Programmstruktur der Steuerungsanordnung (C) prüfende Überwachungsfunktion vorgesehen ist, die bei Aufruf eines Unterprogrammes eine dem Unterprogramm zugeordnete Kennummer mit einem bei Aufruf des Unterprogrammes übergebenen Aufrufkennzeichen vergleicht und bei Unterschieden der Kennzeichen die Steuerungsanordnung in einen Fehlerzustand versetzt und diesen Fehler in der Anzeigeeinrichtung (A) anzeigt.

## Claims

1. Cryptographic device for use with a data terminal (DEE) in a data network, having
- a transmission channel (S) with associated transmission cryptogenerator (KG-S) and corresponding data input and output equipment (DE, DA),
- a reception channel (E) with associated reception cryptogenerator (KG-E) and corresponding data input and output equipment (DE, DA),
- a control device (C) for controlling the reception and transmission channels (S, E),
- an internal monitoring device (UA) assigned to the control device (C) for independent monitoring of the cryptographic device functions, and
- a display means (A) linked to the monitoring device (UA) for identification of a defective function in the cryptographic device by alphanumeric representation of information about the defective function.

2. Cryptographic device according to Claim 1, characterized in that the monitoring device (UA) is designed as a program-controlled computer arrangement, via which a multiplicity of monitoring functions hierarchically structured with respect to one another can be called up for monitoring the cryptographic device functions.

3. Cryptographic device according to Claim 2, characterized in that the monitoring device (UA) is assigned a status memory (ZS) for storing the current operating status of the cryptographic device, and in that a monitoring function is provided which records messages in the control device (C), a corresponding defined operating status being the prerequisite for each message and it being possible for each message to trigger a routine of a control device, and which compares the operating status that is the prerequisite for the message with the actual current operating status of the cryptographic device, and if the statuses differ causes the cryptographic device to assume an error status, and displays the error via the display means (A).

4. Cryptographic device according to Claim 3, characterized in that assigned to the message is a data word which represents the operating status of the cryptographic device that is the prerequisite for the message, and in that there is stored in the status memory (ZS) a further data word which represents the actual current operating status of the cryptographic device, and in that the monitoring device (UA) compares said data words in a monitoring function serving in particular for task tracing.

5. Cryptographic device according to Claim 4, characterized in that a monitoring function serving for the function checking of the memories (MA, ZS, MP) assigned to the control device (C) is provided, which monitoring function checks the memories (MA, ZS, MP) by reading out and re-entering test data words after a "reset" routine has been called.

6. Cryptographic device according to Claim 2, characterized in that a monitoring function that checks the program structure of the control device (C) is provided, which monitoring function, when a subroutine is called, compares a code number assigned to the subroutine with a call-up code transferred when the subroutine was called up, and if the codes differ causes the control device to assume an error status, and displays said error on the display means (A).

## Revendications

1. Appareil de codage destiné à fonctionner avec un terminal de transmission de données (DEE) dans un réseau de transmission de données, comportant
- un canal d'émission (S) comportant un générateur cryptographique d'émission (KG-S) associé et des dispositifs correspondants d'entrée et de sortie de données (DE,DA),
- un canal de réception (E) comportant un générateur cryptographique de réception (KG-E) associé et des dispositifs correspondants d'entrée et de sortie de données (DE,DA),
- un dispositif de commande (C) servant à commander le canal de réception et d'émission (S,E),
- un dispositif interne de contrôle (UA), qui est associé au dispositif de commande (C) et sert à contrôler automatiquement le fonctionnement de l'appareil de codage, et
- un dispositif d'affichage (A) accouplé au dispositif de contrôle (UA) et servant à identifier un fonctionnement défectueux dans l'appareil de codage, au moyen d'une représentation alphanumérique d'informations concernant la fonction défectueuse.

2. Appareil de codage suivant la revendication 1, caractérisé par le fait que le dispositif de contrôle (UA) est réalisé sous la forme d'un dispositif de calcul commandé par programme, au moyen duquel, pour le contrôle du fonctionnement de l'appareil de codage, une multiplicité de fonctions de contrôle structurées hiérarchiquement entre elles, peuvent être appelées.

3. Appareil de codage suivant la revendication 2, caractérisé par le fait qu'au dispositif de contrôle (UA) est associée une mémoire d'états (ZS) servant à mémoriser l'état de fonctionnement instantané de l'appareil de codage, et qu'il est prévu une fonction de contrôle, qui détecte des messages dans le dispositif de commande (C), chaque message supposant un état de fonctionnement défini correspondant et chaque message pouvant déclencher une routine d'un dispositif de commande, et qui compare l'état de fonctionnement supposé pour le message, à l'état de fonctionnement instantané effectif de l'appareil de codage et, dans le cas d'états différents, met l'appareil de codage dans un état d'erreur et indique l'erreur au moyen du dispositif d'affichage (A).

4. Appareil de codage suivant la revendication 3, caractérisé par le fait qu'au message est associé un mot de données, qui représente l'état de fonctionnement, supposé pour le message, de l'appareil de codage, et que dans la mémoire d'états (ZS) est mémorisé un autre mot de données, qui représente l'état de fonctionnement instantané effectif de l'appareil de codage et que, dans le cadre d'une fonction de contrôle utilisée notamment pour réaliser le suivi des tâches, le dispositif de contrôle (UA) compare ces mots de données.

5. Appareil de codage suivant la revendication 4, caractérisé par le fait qu'il est prévu une fonction de contrôle, qui est utilisée pour contrôler le fonctionnement des mémoires (MA,ZS,MP) associées au dispositif de commande (C) et qui, après appel d'une routine "RESET", contrôle les mémoires (MA,ZS,MP) par lecture et réintroduction de mots de données de test.

6. Appareil de codage suivant la revendication 2, caractérisé par le fait qu'il est prévu une fonction de contrôle, qui teste la structure de programme du dispositif de commande (C) et qui, lors de l'appel d'un sous-programme, compare un numéro caractéristique associé au sous-programme à un signal caractéristique d'appel transféré lors de l'appel du sous-programme et, en cas de différence entre les signaux caractéristiques, met le dispositif de commande dans un état d'erreur et affiche cette erreur dans le dispositif d'affichage (A).
